# EUROPEAN PATENT SPECIFICATION

(11) **EP 1 597 527 B1**
(45) Date of publication and mention of the grant of the patent: **22.06.2011**
(21) Application number: 03759085.8
(22) Date of filing: 26.10.2003
(51) Int. Cl.: F28D 9/00, F28F 21/06, F24F 5/00

(54) **A METHOD FOR MANUFACTURING A DEW POINT COOLER, AND DEW POINT COOLER OBTAINED WITH THAT METHOD**
VERFAHREN ZUR HERSTELLUNG EINES TAUPUNKTVERDUNSTUNGSKÜHLERS UND MIT SOLCHEM VERFAHREN HERGESTELLTER TAUPUNKTVERDUNSTUNGSKÜHLER
PROCÉDÉ DE FABRICATION D'UN REFROIDISSEUR PAR ÉVAPORATION AU POINT DE ROSÉE ET REFROIDISSEUR PAR ÉVAPORATION AU POINT DE ROSÉE AINSI PRODUIT

(30) Priority: 31.10.2002 NL 1021794; 27.02.2003 NL 1022794
(43) Date of publication of application: 23.11.2005
(73) Proprietor: Oxycom Beheer B.V., 8102 GZ Raalte (NL)
(72) Inventor: REINDERS, Johannes, Antonius, Maria, NL-7231 PE Warnsveld (NL)
(74) Representative: Clarkson, Paul Magnus
(86) International application number: PCT/NL2003/000727
(87) International publication number: WO 2004/040220

(56) References cited:
- EP-A- 0 014 863
- EP-A- 0 429 953
- EP-A- 0 777 094
- WO-A-02/27254
- WO-A-83/03464
- WO-A1-01/57460
- DE-A- 2 546 450
- GB-A- 818 603
- GB-A- 1 498 621
- GB-A- 2 094 434
- US-A- 2 576 213
- US-A- 3 847 211
- US-A- 4 002 040
- US-A- 4 089 324
- US-A- 4 407 359
- US-A- 4 460 388
- US-A- 4 674 295
- US-A- 4 769 053
- US-A- 5 279 361
- US-A- 5 301 518
- US-A- 5 349 829
- US-A- 5 800 595
- US-A1- 2002 144 808
- PATENT ABSTRACTS OF JAPAN vol. 008, no. 234 (M-334), 26 October 1984 (1984-10-26) -& JP 59 113942 A (SANYO DENKI KK), 30 June 1984 (1984-06-30)
- PATENT ABSTRACTS OF JAPAN vol. 007, no. 102 (M-211), 30 April 1983 (1983-04-30) -& JP 58 022896 A (HITACHI SEISAKUSHO KK), 10 February 1983 (1983-02-10)
- PATENT ABSTRACTS OF JAPAN vol. 1996, no. 11, 29 November 1996 (1996-11-29) -& JP 08 178576 A (DAIKIN IND LTD), 12 July 1996 (1996-07-12)
- PATENT ABSTRACTS OF JAPAN vol. 010, no. 199 (C-359), 11 July 1986 (1986-07-11) -& JP 61 041777 A (SUMITOMO LIGHT METAL IND LTD), 28 February 1986 (1986-02-28)
- PATENT ABSTRACTS OF JAPAN vol. 003, no. 004 (M-045), 17 January 1979 (1979-01-17) -& JP 53 128047 A (MATSUSHITA ELECTRIC WORKS LTD), 8 November 1978 (1978-11-08)

## Description

The invention relates to a method of manufacturing
a dew point cooler, comprising: two sets of medium through-flow channels placed mutually interlaced, which sets of channels form respectively a primary medium circuit and a secondary medium circuit, through which two medium flows can flow in counter flow, physically separated and in heat-exchanging contact;
heat-conducting walls separating said channels; and a housing in which the walls bounding the channels are accommodated, to which housing connect two inlets and two outlets for the two sets of channels.

It is an object of the invention to provide, a method of manufacturing a dew point cooler which can be performed very inexpensively, rapidly and with great reliability, so that the heat exchangers can be manufactured, also in mass production, at considerably reduced cost compared to the prior art.

In respect of the above stated objectives, the invention provides a method of manufacturing the specified dew point cooler, which method comprises the following steps, to be performed in suitable sequence, of:
(a) providing a plastically deformable plate, for instance of a plastic or a metal such as copper or aluminium;
(b) providing at least one metal strip modelled into a general wave shape, for instance of copper or aluminium, which can serve as a row of fins;
(c) plastically deforming the plate such that it acquires an edge zone with which it can be connected to a similar plate;
(d) prior to or after step (c), connecting the strip to the plastically deformable plate by means of the outermost surfaces of the wave shape directed toward the plate such that a heat-conducting wall with heat-conducting fins is created;
(e) repeating steps (a), (b), (c) and (d) a number of times to obtain a number of heat-conducting walls with fins;
(f) connecting these walls at least in twos to each other using the edge zones according to step (c) such that a chosen number of such walls is placed in mutually parallel relation; and
(g) accommodating these walls in a housing with primary and secondary inlets and outlets for the respective media and furthermore providing the fins with a hydrophilic and porous of fibrous coating.

The plastic deformation can be carried out in any appropriate manner, wherein the choice is determined partly by the nature and type of the applied material. Use can for instance be made of pressing, thermo-forming, vacuum-forming, injection moulding.

Particularly in the important case that aluminium is applied, the method can advantageously be embodied such that the plastic deformation according to step (c) takes place in cold state.

The method can for instance be embodied such that the plate and/or the fins are provided prior to step (d) with an adhesive layer, and that step (d) is performed by pressing the plate and the fins against each other at least at the position of the contact surfaces, optionally while heating.

A simple press tool can for instance be used for this purpose which provides the necessary adhesion through pressure and optional heating for a certain time. It must be ensured that the heat resistance represented by the adhesive layer lies below a predetermined value. This means that the adhesive layer, given its heat-conducting properties, may have only a limited thickness after forming of the connection.

Great advantages are provided by the method in which the adhesive layer substantially covers the plate and/or the fins completely and protects them against corrosion. The adhesive layer hereby fulfils an adhesive and an anti-corrosive function.

The method can for instance be embodied such that the adhesive layer is applied as foil.

Particularly when a thermoplastic plastic is applied as material for the plastically deformable plate, the method can be embodied such that the adhesive layer is formed together with the plate by co-extrusion into a laminated co-extrudate.

An important variant of the method has the special feature that the plate and/or the fins consist of a material to which the adhesive layer adheres with difficulty, for instance aluminium, and that the part of the adhesive layer directed to the aluminium is adhered thereto via a layer of primer.

The primer layer provides an excellent adhesion of the adhesive layer to the aluminium. Without the primer this adhesion would leave something to be desired, which cannot be permitted in respect of the reliability of the heat exchanger.

The latter specified method can advantageously be embodied such that the primer has a chosen colour, pattern and/or texture, and that the adhesive layer is transparent. The primer can for instance be gold-coloured. A heat exchanger plate hereby acquires an extremely attractive appearance. Colour, pattern and/or texture can also serve as coding for heat exchanger components, with an eye to ready identification of the category within the selection of technical specifications.

In yet another embodiment the method has the special feature that the primer and/or the coating contain silver, such that the adhesive layer has an anti-microbial action. This embodiment has the great advantage of not requiring any specific provisions in respect of for instance bacterial contamination.

According to yet another aspect of the invention, the method has the special feature that finished plates with fins are adhered to each other in alternate pairs using edge zones, and that a number of thus formed pairs are stacked onto each other prior to step (g). The finished plates or walls can for instance be identical.

The latter embodiment of the method can particularly take place such that adhesion takes place by providing the plates in advance with the adhesive layer and pressing the edge zones against each other, optionally while heating. This method can also be performed in exceptionally simple, inexpensive and rapid manner.

This latter described method can further be embodied such that the plates are adhered to each other via a sheet which is placed beforehand therebetween and which is provided on both sides with an adhesive layer, and that the respective edge zones directed toward each other and preferably also the respective outer surfaces of the fins directed toward each other are thus adhered to each other by being pressed together, optionally while applying heat, for instance by feeding through hot air.

The invention further relates to a dew point cooler obtained by applying any of the above described specifications and as defined in the claims.

A heat exchanger can for instance have the special feature that the walls are arranged in at least one group of at least two walls, wherein a group is formed from an integral sheet which comprises at least a layer of plastic and which is brought into a preselected form by pressing, thermo-forming, vacuum-forming, injection moulding or other modelling process and is provided with a hinge zone in the transition between two adjacent walls, wherein by folding about the hinge zone the two walls are then placed into substantially mutually parallel relation and at a chosen mutual distance, and are held by positioning means.

In the simplest embodiment there are two walls held at a mutual distance which, in a generally U-shaped relation, together bound a primary or secondary medium through-flow circuit, wherein the outer side of the U also bounds respective secondary or primary medium channels. This is however only a very simple embodiment.

The invention is particularly suitable for mass production with very easily adjustable dimensioning, since there is in principle a completely free choice of the number of channels. There is then a concertina-like or zigzag structure which can extend in principle over an unlimited number of channels.

Said positioning means can be embodied in any appropriate manner. Use can for instance be made of snap connections, glue connections, welded joints, folded seam connections, hook connections etc., optionally in combination with spacers. A condition in all circumstances is that the secondary and the primary medium flow are substantially separated from each other physically.

In a specific embodiment the dew point cooler has the feature that a hinge zone consists of two hinge lines which are located at said mutual distance. The hinge lines can each consist of a line of smaller thickness, such as in the form of a film hinge, a score, a wave structure or any other suitable structure. A perforated line will in general be less suitable because of the desired separation between the two medium flows.

In another embodiment the dew point cooler has the feature that a hinge zone comprises two parts which form part of the respective walls and are folded at substantially 90°, which parts are mutually connected by a hinge line.

A considerable improvement in the efficiency of the dew point cooler can be realized with an embodiment having the special feature that heat-conducting fins or surface area-increasing means are arranged, prior to folding, on both sides of the sheet in the zones of the walls in order to increase the heat transfer between the two media. The fins, which can also be embodied for instance as pins, generally surface area-increasing provisions, must have a good heat conduction, be manufactured for instance from a suitable material such as copper, aluminium, carbon or the like.

In a particular embodiment the dew point cooler has the feature that heat-conducting fins are arranged, prior to folding, on both sides of the sheet in the zones of the walls in order to increase the heat transfer between the two media. The mechanical co-action can be brought about by adhesion, such as by glueing, soldering, welding or by pressing. The walls with the fins can for instance be accommodated close-fittingly in the housing.

In order to improve the heat-exchanging contact via the wall, the dew point cooler can have the feature in a particular embodiment that the sheet is provided in the zone of the wall with a perforation, to the edges of which the heat-conducting wall parts carrying the fins are sealingly adhered. The relevant wall parts can be provided with a heat-conducting material, for instance a metal such as copper or aluminium, or also be embodied in a heat-conducting plastic, for instance a plastic including carbon, aluminium powder or the like. The drawback of this structure is that the manufacture of the heat exchanger requires an additional step. The advantage is that the performance can be superior and, when metal wall parts are used, the construction can have an increased robustness.

The dew point cooler can advantageously have the special feature that the inlet zone and/or the outlet zone of a channel is provided with a deflection dam which deflects the relevant medium flow to the inlet or from the outlet.

The modelling process, for instance vacuum-forming or thermo-forming, lends itself very well to the manufacture of a sheet of the described specification. Other provisions, such as water outlet and the like, can also be arranged in this way.

According to the invention, the dew point cooler has the special feature that at least the fins in the secondary medium through-flow circuit are provided with a hydrophilic and porous or fibrous coating, consisting for instance of a microporous Portland cement, which layer is kept wet by watering means forming part of the heat exchanger such that, through evaporation therefrom by the secondary medium, respectively the layer, the secondary fins, the wall, the primary fins and finally the primary medium are cooled, which layer has a small thickness such that in wet state it has a sufficiently low heat resistance such that the heat exchanger can operate as dewpoint cooler.

In order to obtain a good mechanical strength, corrosion resistance and heat transfer in combination with relatively low cost, the dew point cooler can have the special feature that the sheet is embodied as a laminate, comprising a metal inner layer which is coated on both sides with plastic outer layers. The inner layer can for instance consist of aluminium with a thickness in the order of magnitude of 25 µm. The plastic outer layers, which can consist of any suitable plastic, can for instance also have a thickness in the order of magnitude of 25 µm. With such a small thickness the heat resistance represented by the plastic outer layers is negligible.

According to another aspect of the invention, the dew point cooler can have the special feature that two sheets are each folded into the form of a rectangular wave shape, wherein the two wave shapes have equal pitch, and are positioned mutually interlaced with a relative longitudinal orientation of 90°.

US5349829 discloses an air cooling apparatus in which air to be cooled is directed through the dry channel to sensibly cool the air. Wet channels are arranged adjacent the dry channels and a portion of the air exiting the dry channels is provided as cooled supply air and a portion is redirected through the wet channels countercurrently to the flow in the dry channels. In one embodiment a plurality of alternating wet and dry channels are spaced apart by a plurality of spacers. The wet channels each comprise spaced-apart evaporative media layers attached to moisture impervious layers of the adjacent dry channels.

US 4 002 040 A discloses a heat exchanger for cooling a first stream of air by a secondary air stream, having two groups of channels. The channels are defined by parallel walls spaced by transversally extending walls. The channels of the secondary air stream include layers of wettable material bearing against the walls and the transverse walls of the channels.

The invention will now be elucidated with reference to the annexed drawings. Herein:
Fig. 1a shows a perspective view of a plastic sheet modelled by thermo-forming, on both sides of which heat-conducting fins are arranged;
Fig.1b shows the phase in which the sheet is folded along the two fold lines such that the walls are moved toward each other;
Fig. 1c shows the end position in which the two walls are positioned fixedly in mutually parallel relation;
Fig. 2a, 2b and 2c show views corresponding to respectively fig. 1a, 1b and 1c of an embodiment with the same width but of greater length;
Fig. 3a shows a perspective view of a sheet having in the zone of the walls rectangular perforations for passage of fins;
Fig. 3b shows a perspective view of a heat-conducting wall, on both sides of which fins are arranged which fit into the perforations of the sheet according to Fig. 3a;
Fig. 4 shows a partly broken-away perspective view of a heat exchanger, wherein the housing is omitted for the sake of clarity;
Fig. 5a and 5b show perspective views from different sides of a dewpoint cooler;
Fig. 6 is a perspective view of a part of a dewpoint cooler;
Fig. 7 shows a view corresponding with Fig. 4 of a variant;
Fig. 8 is a cut-away perspective view of an alternative of the embodiment of Fig. 3a and 3b;
Fig. 9 shows a schematic perspective view of a heat exchanger constructed from two sheets folded in mutually interlaced manner;
Fig. 10a shows a very schematic view of a compression mould for modelling a plate into a heat-exchanging wall;
Fig. 10b shows a very schematic view of the arranging of strips of fins on either side of the wall;
Fig. 10c shows the heat-exchanging wall having heat-conducting fins arranged thereon;
Fig. 10d shows the stacking of four such walls with fins in order to form the interior of a dew point cooler according to the invention;
Fig. 11 shows an alternative, wherein the heat-exchanging walls and also fins are adhered to each other by means of an adhesive foil;
Fig. 12 is a schematic perspective partial view of a practical embodiment of a strip of fins; and
Fig. 13 is a perspective view of a modelled plastic wall.

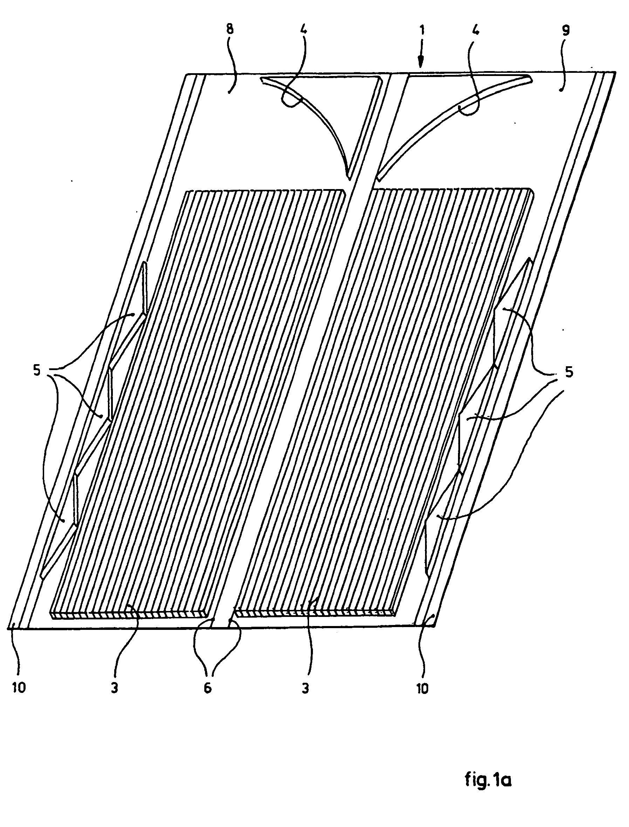

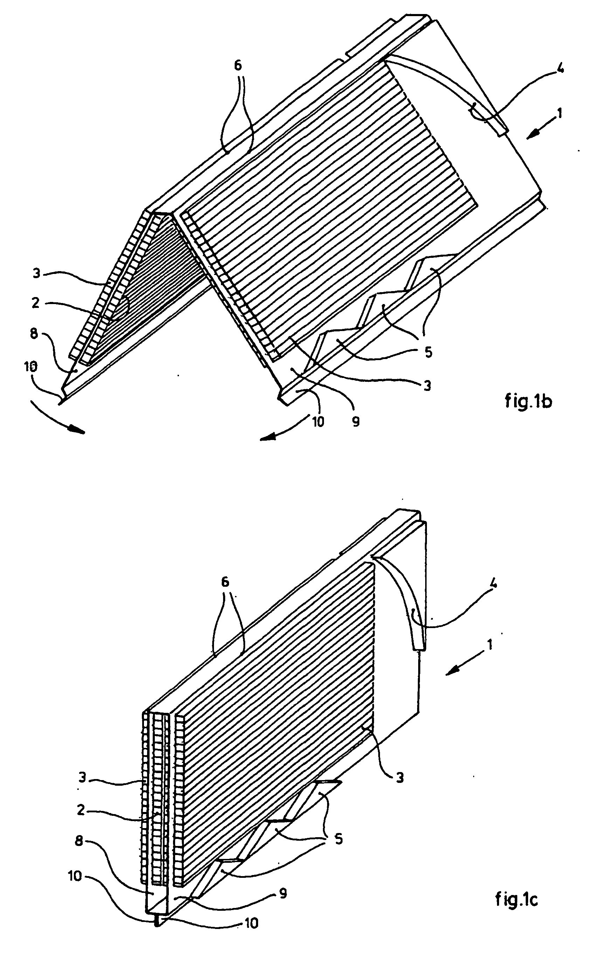

Fig. 1 shows a modelled sheet 1 consisting of a thin foil-like material of for instance polystyrene, PVC or PET. It is possible using such materials to apply a relatively small wall thickness, for instance in the order of 0.1 mm. Inexpensive production with a short throughput time is possible with for instance thermo-forming.

Sheet 1 is provided on both sides with schematically indicated packets of fins which, in Fig. 1, are designated 2 for the primary medium through-flow circuit and 3 for the secondary medium through-flow circuit.

Attention is drawn to the fact that the fins 2, 3 are shown very schematically. They consist in this embodiment of strips of limited length modelled in zigzag form in the longitudinal direction, i.e. the medium flow direction. This aspect is however not significant for the present invention.

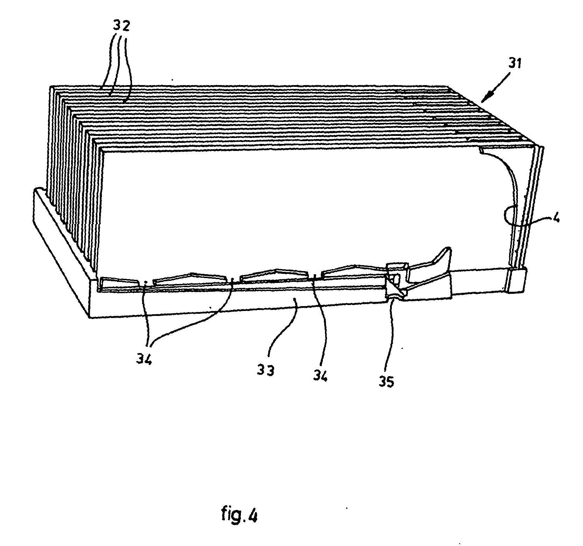

Deflection dams 4 are formed in sheet 1 for deflecting the relevant medium flow. This aspect will be further elucidated with reference to Fig. 4.

Sheet 1 further has a number of condensation outlets in the form of funnel-shaped structures with triangular intermediate forms 5 for draining water. This may for instance be condensation water, although in the case of operation of the heat exchanger as dewpoint cooler it may also be excess water added to the secondary medium circuit.

As will be apparent from comparing the three successive steps of Fig. 1a, 1b and 1c, the walls 8, 9 are folded toward each other along hinge lines 6 and 7 to form the folded-up situation shown in Fig. 1c. The construction obtained here is an element of a packet of such elements together forming a heat exchanger. Reference can for instance be made in this respect to Fig. 4, 5a, 6 and 7.

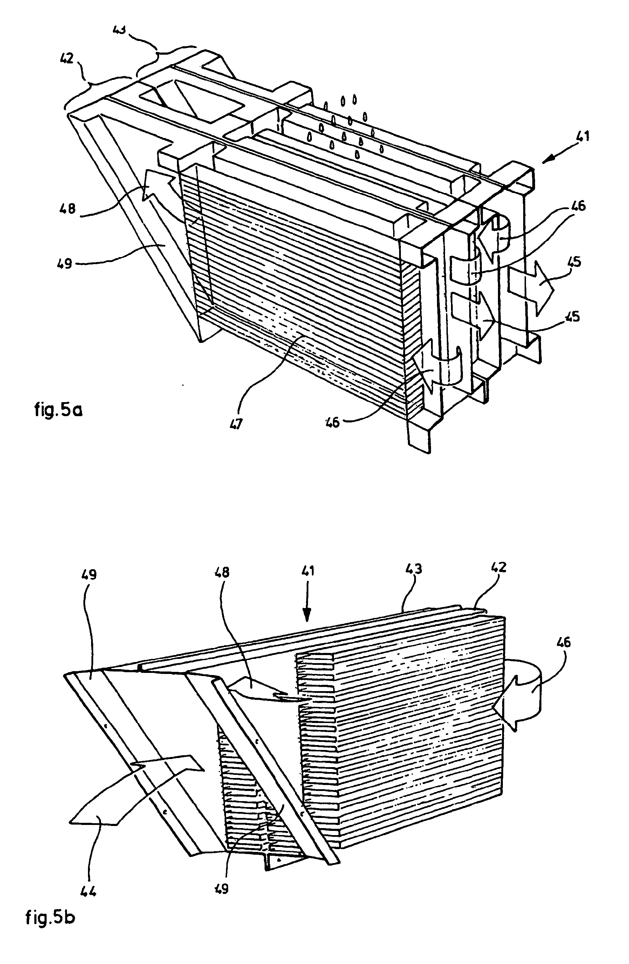

The heat exchanger serves as a dewpoint cooler. As described above, an effective, for instance intermittent watering of the heat-exchanging surface in the secondary medium circuit must in that case be ensured. This implies that fins 3 must be provided with a coating which has a hydrophilic character and which exhibits an open porosity or fibrous structure such that a rapid distribution of water or other evaporable liquid can occur through capillary suction. The manner in which this watering takes place falls outside the scope of the present invention and will therefore not be discussed further. Fig. 5a shows this watering symbolically.

During this production phase, in which the fins are already arranged, sheet 1 according to Fig. 1a is treated by at least wetting the fins, in any case on their outer side, and by then applying a mortar in powder form to the fins by atomization. The thus obtained coating of microporous Portland cement can have a thickness in the order of for instance 50 µm. The process in question is highly controllable and produces a hydrophilic and water-buffering coating. The fins 2 in the primary circuit are not provided with such a coating, since no evaporation occurs in the primary circuit.

The free edges 10 of wall parts 8, 9 are carried toward each other as according to Fig. 1b and connected to each other as according to Fig. 1c, for instance by glueing, welding or the like. It will be apparent that a sealing primary medium channel is obtained in this manner. For sealing of a secondary medium channel in which the fins 3 extend other provisions are necessary, in particular sealing means co-acting with a housing.

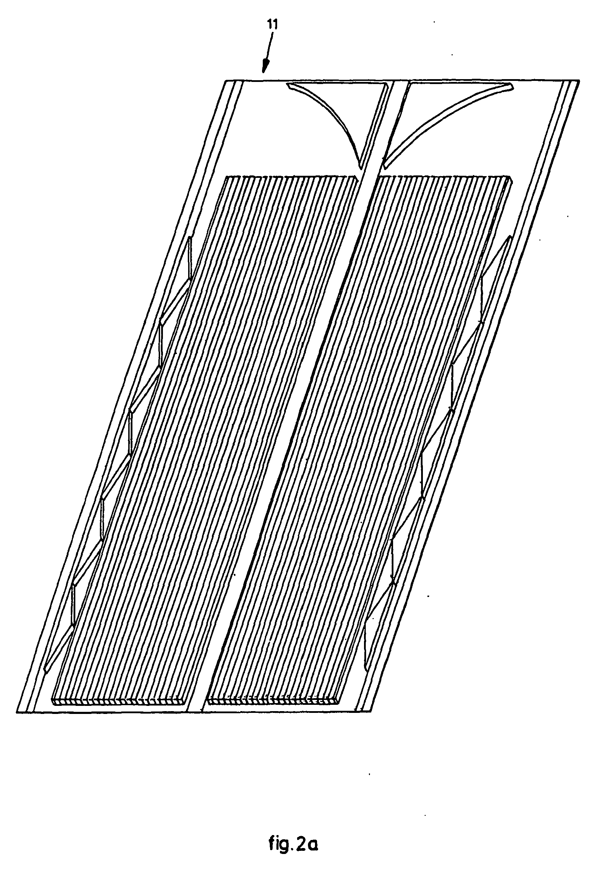

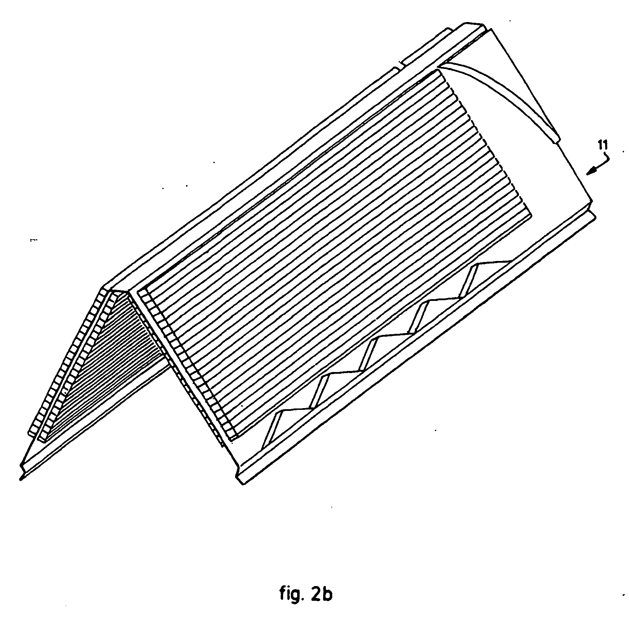

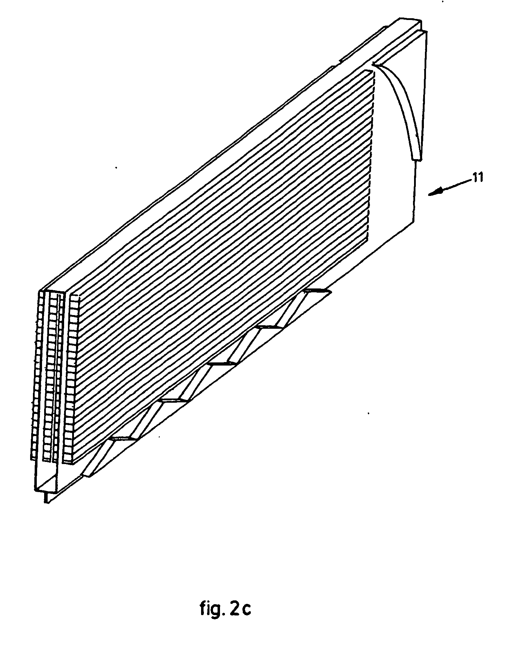

Fig. 2a, 2b and 2c show structures the same as those according to Fig. 1a, 1b and 1c, with the understanding that the length in the medium flow direction is greater. It is noted here that the medium flow direction extends in the direction of the drawn lines of fins 3. The sheet is designated in Fig. 2 with reference numeral 11.

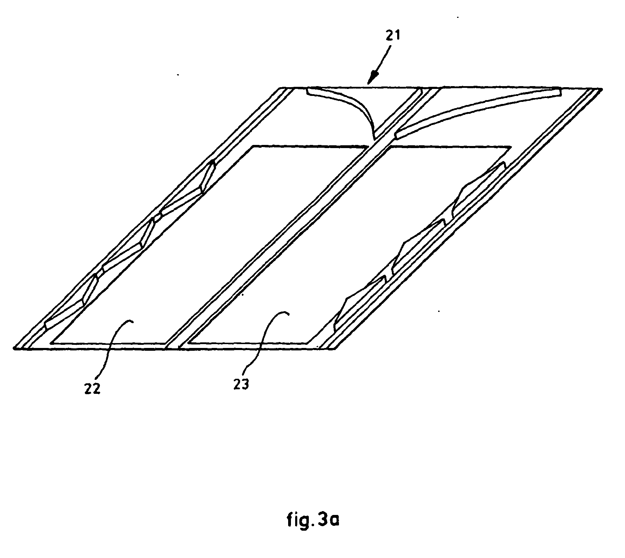

Fig. 3a shows a sheet 21, the general structure of which corresponds with that of sheet 1 of Fig. 1. Sheet 21 is not however provided with fins 2, 3, but is provided instead with two perforations 22, 23. Into these perforations fit fins 24 which are arranged on a heat-conducting wall 25, for instance by welding or soldering. The fins as well as the wall can be manufactured from for instance copper. Fins designated with 26 are likewise situated on the other side of the wall. The respective blocks of fins fit into perforations 22, 23. The heat-conducting wall part 25 is adhered sealingly to plate 21, for instance by glueing. The finally obtained structure has the same external structure as shown in Fig. 1a. The structure differs from that in Fig. 1a in that the plate or wall part 25 extends on the underside of sheet 1. It is of course necessary to take into account that wall part 25 must bend readily along hinge lines 6.

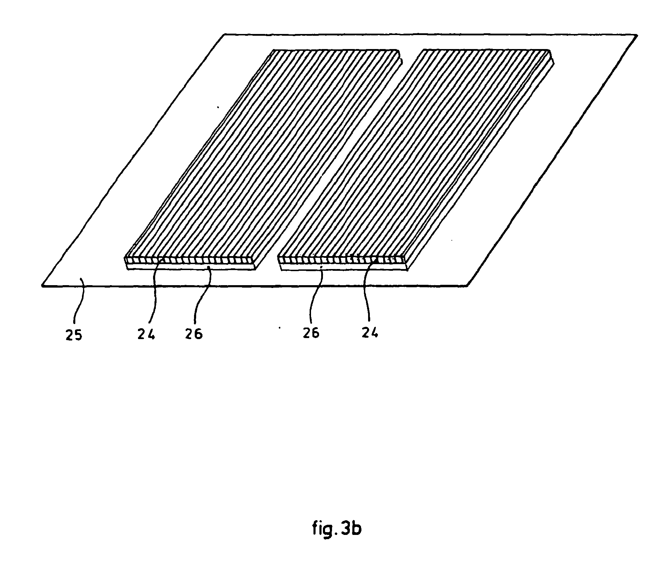

It is further noted in respect of Fig. 3b that fins 26 are shown with contour lines only for the sake of clarity. They are of course not visible in this perspective view.

Fig. 4 shows the interior 31, i.e. without a housing or casing, of a dewpoint cooler with the fins omitted. A number of units 32, comparable to the unit of Fig. 1c, are placed in a base 33. As described briefly above, water can be drained via water outlets 34 via an opening 35 in base 33.

Fig. 5a and 5b each show a dewpoint cooler 41 with two units 42, 43. As shown in Fig. 5b, a primary medium flow 44 is admitted to the inside from the one side. On the other side a part of this primary flow, designated 45, exits to the outside. Another part 46 is reversed as partial flow and passes over the watered fins 47. The thus wetted secondary airflow 48 is deflected upward by deflection dams 49 and leaves unit 41 from the top side.

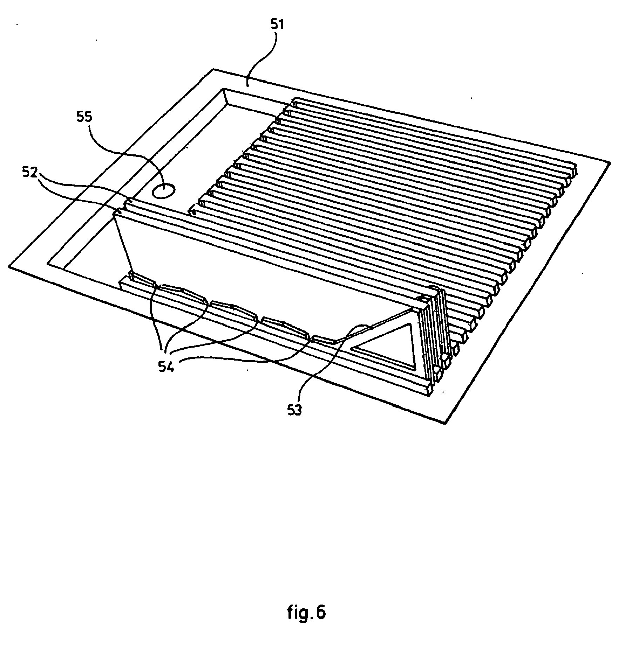

Fig. 6 shows a base in the form of a tray 51 in which a number of units 52 are disposed. Use is also made in this embodiment of deflection dams 53. Fins are not drawn. The openings between funnels 54 give access to the bottom of the tray for water drainage via outlet opening 55.

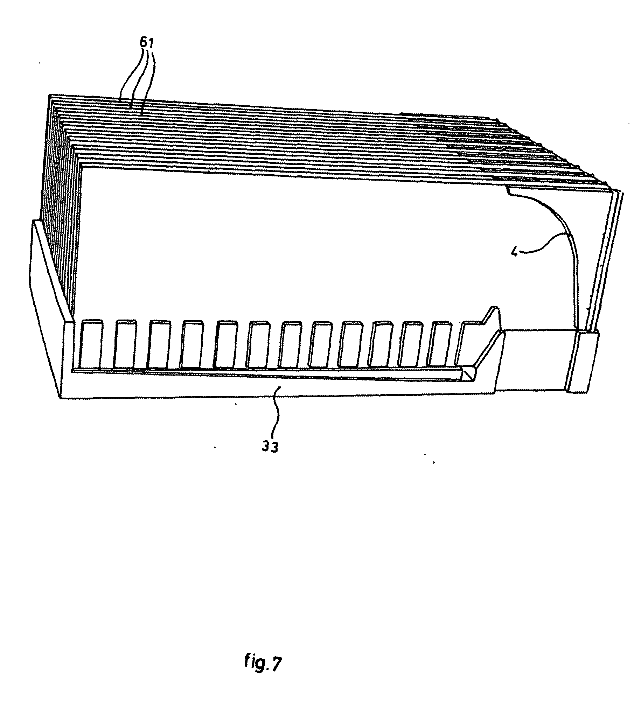

Fig. 7 shows a structure related to that of Fig. 4. Units 61 have a differently modelled drainage provision.

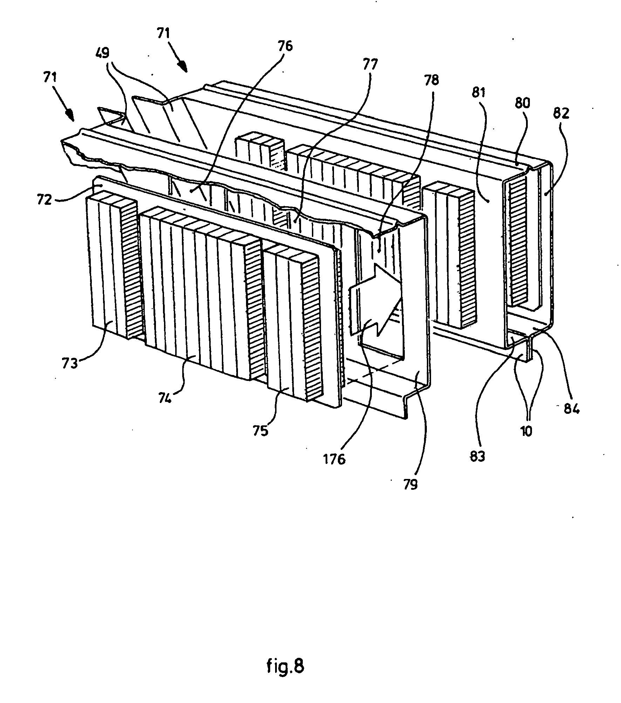

Fig. 8 shows two units 71 based on the principles elucidated with reference to Fig. 3a and 3b. A copper plate or foil 72 bears on both sides fins which are ordered in respective blocks 73, 74, 75. Identical fins are situated on the non-visible side. These fit as according to an arrow 176 through respective openings 76, 77, 78 in preformed sheet 79. Similarly to the structure shown in Fig. 1c, the walls are folded in the upper hinge zone into a mutually parallel relation, whereafter the free edges 10 are adhered to each other. At variance with the structure of Fig. 1, use is made in this embodiment of a single hinge line 80 which is embodied as a score with a substantially rigid zone on either side such that, also due to the correspondingly formed co-acting lower wall parts 83, 84, the final mutual distance of walls 81, 82 corresponds with the chosen distance.

This distance can for instance be chosen such that the fins press against each other. By means of a suitable pressing construction it is possible to hereby achieve that units 71 (of which there can be more than two) form a mechanically substantially rigid packet. The fins thus make an essential contribution toward the mechanical strength of the finally obtained heat exchanger.

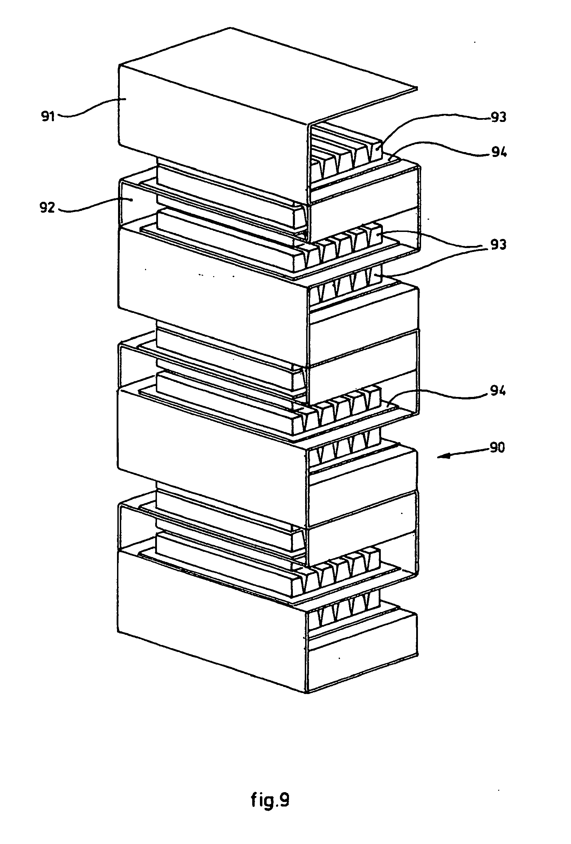

Fig. 9 shows an alternative embodiment of the dew point cooler according to the invention. Dew point cooler 90 comprises two sheets 91, 92 which are each folded in the form of respective rectangular wave shapes of identical pitch or wavelength. Sheets 91, 92 are positioned mutually interlaced with a relative longitudinal orientation of 90°. The manifolds necessary for feeding and discharging the primary and secondary medium flow are omitted from this schematic drawing. Dew point cooler 90 comprises fins, all designated with 93.

As in the embodiment of Fig. 3, in the embodiment of Fig. 9 the dew point cooler 90 can advantageously be embodied such that fins 93 are in heat-exchanging contact with each other via respective holes in sheets 91, 92, for instance via heat-conducting carrier plates 94. This avoids the heat resistance via the two sheets 91, 92 becoming disturbingly manifest at the location of the fins. Fins 93 and carrier plates 94 must in that case be in the most direct possible thermal contact with each other, for instance by means of a heat-conducting glue layer (for instance a thin pressure-sensitive or thermally activated plastic glue layer), a welding operation, a soldering operation, a mechanical coupling or the like.

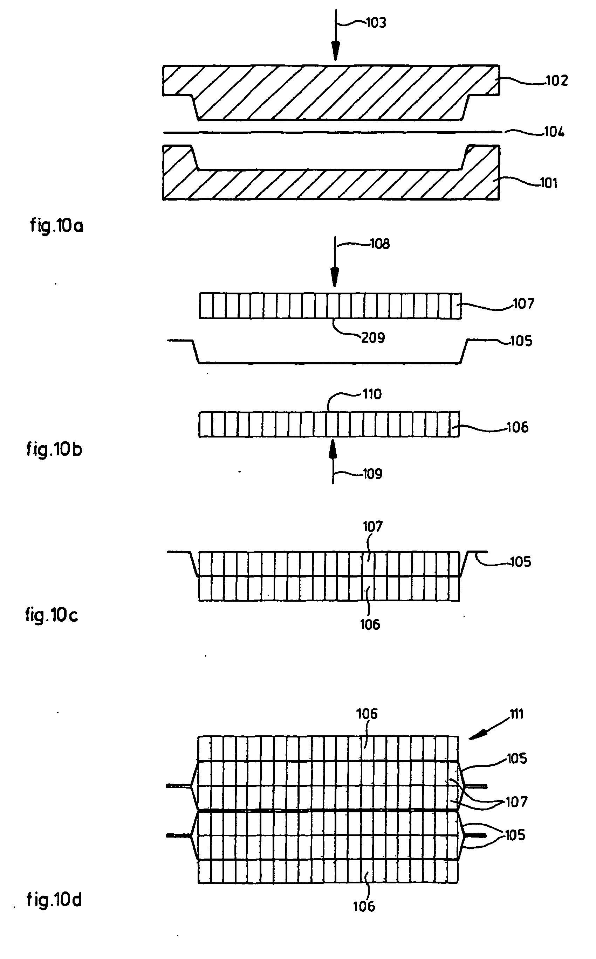

Fig. 10a shows an opened mould consisting of a lower mould part 101 and an upper mould part 102 which corresponds therewith and which can be closed as according to arrow 103 to cause plastic cold deformation of an aluminium plate 104, which is cowered on both sides with a glue layer activated by heat and pressure.

Fig. 10b shows that a strip of fins 106, 107 is positioned from both sides on the thus formed, modelled heat-exchanging wall 105 and then pressed on as according to arrows 108, 109 respectively.

Fig. 10c shows wall 105 with the strips of fins 106, 107 arranged thereon. It is noted that the lower surfaces 209 of fins 107 and the upper surfaces 110 of fins 106 are preferably also provided with a glue layer activated by heat and pressure.

Fig. 10d shows the manner in which a number of identical heat-exchanging walls 105 with fins 106, 107 arranged thereon can be coupled to each other to form the interior of a heat exchanger, which must later also be placed in a suitable housing having inlets and outlets for the primary and the secondary medium, as well as associated manifolds, whereby said inlets and outlets can be coupled in the correct manner to the diverse channels in heat exchanger unit 111 of Fig. 10d.

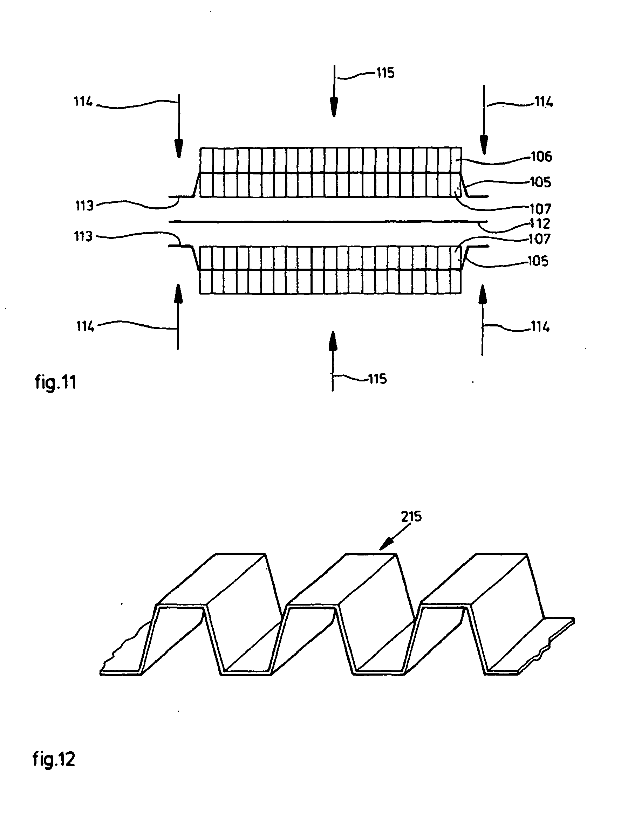

Fig. 11 shows an alternative in which an adhesive foil 112 is placed between two finished walls with fins, whereafter, by suitably pressing together the edge zones 113 with foil 112 therebetween as according to arrows 114 and by pressing the fins 107 against each other with foil 112 therebetween as according to arrows 115, a mechanically very strong structure is created which, owing to the tensively strong connection between walls 105 via adhesive foil 112, is able to withstand an increased internal pressure in the relevant heat-exchanging medium. A very effective manner of causing the adhesive foil 112 to melt under some pressure is to feed hot air through the space occupied by fins 107. The desired softening and, after cooling, the desired adhesion is hereby realized in a short time. The adhesive foil layer 112 is manufactured from a plastic having a relatively low softening and melting point.

Fig. 12 shows schematically the general wave shape suitable for manufacturing a strip of fins, for instance of copper or aluminium. The fins can for instance be embodied as a laminate consisting of a base strip of copper or aluminium, a layer of primer applied thereto and an anti-corrosive adhesive layer applied thereover which is activated by heat and pressure for coupling of the strip of fins 215 to a wall 105.

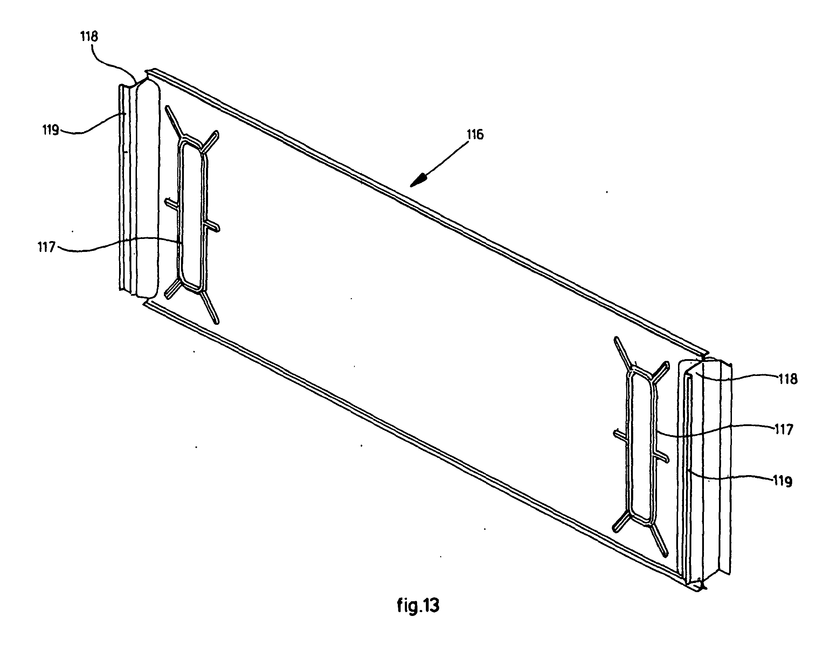

Finally, Fig. 13 shows a plastic heat-exchanging wall 116 with relatively shallow stiffening profiles 117 on both short sides, in addition to bent edges 118 with end flanges 119, which bent edges 118 can act as reflection dams. It is noted in this respect that it is unnecessary in most applications to make use of the smooth rounded form of reflection dams as shown for instance in Fig. 1a. The flows of the media are generally steady such that there need be no fear of undesired rheological phenomena.

The heat-exchanging wall 116 of Fig. 13 is symmetrical. This not essential in all circumstances.

## Claims

1. Method of manufacturing a dew point cooler, comprising:
two sets of medium through-flow channels placed mutually interlaced, which sets of channels form respectively a primary medium circuit and a secondary medium circuit, through which two medium flows can flow in counter flow physically separated and in heat-exchanging contact
heat-conducting walls (8, 9, 25, 72, 94, 105, 116): separating said channels; and a housing in which the walls bounding the channels are accommodated, to which housing connect two inlets and two outlets for the two sets of channels,
which method comprises the following steps, to be performed in suitable sequence, of:
(a) providing a plastically deformable plate;
(b) providing at least one metal strip modelled into a general wave shape, which can serve as a row of fins (2, 3, 24, 47, 26, 94, 106, 107);
(c) plastically deforming the plate such that it acquires an edge zone with which it can be connected to a similar plate;
(d) prior to or after step (c), connecting the strip to the plastically deformable plane by means of the outermost surfaces of the wave shape directed toward the plate such that a heat-conducting wall with heat-conducting fins is created;
(e) repeating steps (a), (b), (c) and (d) a number of times to obtain a number of heat-conducting walls with fins;
(f) connecting these walls at least in twos to each other using the edge zones according to step (c) such that a chosen number of such walls is placed in mutually parallel relation; and
(g) accommodating these walls in a housing with primary and secondary inlets and outlets for the respective media; further including
the step of providing the fins with a hydrophilic and porous or fibrous coating.

2. Method as claimed in claim 1, wherein the elastic deformation according to step (c) takes place in cold state.

3. Method as claimed in claim 1, wherein the plate and/or the fins are provided prior to step (d) with an adhesive layer, and that step (d) is performed by pressing the plate and the fins against each other at least at the position of the contact surfaces, optionally while heating.

4. Method as claimed in claim 3, wherein the adhesive layer substantially covers the plate and/or the fins completely and protects them against corrosion.

5. Method as claimed in claim 4, wherein the adhesive layer is applied as foil.

6. Method as claimed in claim 4, wherein the adhesive layer is formed together with the plate by co- extrusion into a laminated co-extrudate.

7. Method as claimed in claim 4, wherein the plate and/or the fins consist of a material to which the adhesive layer adheres with difficulty and that the part of the adhesive layer directed to the plate and/or fins is adhered thereto via a layer of primer.

8. Method as claimed in claim 7, wherein the primer has a chosen colour, pattern and/or texture, and that the adhesive layer is transparent.

9. Method as claimed in claim 4, wherein the primer and/or the coating contain silver, such that the adhesive layer has an anti-microbial action.

10. Method as claimed in claim 1, wherein finished plates with fins are adhered to each other in alternate pairs using edge zones, and a number of thus formed pairs are stacked onto each other prior to step (g).

11. Method as claimed in claims 3 and 10, wherein adhesion takes place by providing the plates in advance with the adhesive layer and pressing the edge zones against each other, optionally while heating.

12. Method as claimed in claim 11, wherein the plates are adhered to each other via a sheet (112) which is placed beforehand therebetween and which is provided on both sides with an adhesive layer, and that the respective edge zones directed toward each other and preferably also the respective outer surfaces of the fins directed toward each other are thus adhered to each other by being pressed together, optionally while applying heat, for instance by feeding through hot air.

13. A dewpoint cooler comprising;
(a) two sets of medium through-flow channel, which sets of channels form respectively a primary medium circuit and a secondary medium circuit, through which two medium flows can flow in counter flow physically separated and in heat exchanging contact;
(b) a plurality of heat-conducting walls (8, 9, 25, 72, 94, 105, 116) connected in mutually parallel relation and separating said channels;
(c) a housing in which the walls bounding the channels are accommodated; and
(d) two inlets and two outlets associated with the two sets of channels and connected to the housing; **characterised in that**
each heat-conducting wall comprises (i) a plastically deformed plate having an edge zone (10, 113) plastically deformed from the plate, with which it is connected to a similar plate and (ii) a row of fins in the form of a metal strip modelled into a general wave shape (2, 3, 24, 26, 47, 94, 106, 107), connected to the plate in at least the secondary medium through-flow circuit, said fins comprising a hydrophilic and porous or fibrous coating; and there is further provided
(e) watering means for wetting the hydrophilic and porous or fibrous coating.

14. Dewpoint cooler as claimed in claim 13, **characterized in that** the walls are arranged in at least one group of at least two walls, wherein a group is formed from an integral sheet which comprises at least a layer of plastic and which is brought into a preselected form by pressing, thermo-forming, vacuum-forming, injection moulding or other modelling process and is provided with a hinge zone in the transition between two adjacent walls, wherein by folding about the hinge zone the two walls are then placed into substantially mutually parallel relation and at a chosen mutual distance, and are held by positioning means.

15. Dewpoint cooler as claimed in claim 14, **characterized in that** a hinge zone consists of two hinge lines (6) which are located at the said mutual distance.

16. Dewpoint cooler as claimed in claim 14, **characterized in that** a hinge zone comprises two parts which form part of the respective walls and are folded at substantially 90°, which parts are mutually connected by a hinge line.

17. Dewpoint cooler as claimed in claim 14, **characterized in that** the sheet is embodied as a laminate, comprising a metal inner layer which is coated on both sides with respective plastic outer layers.

18. Dewpoint cooler as claimed in claim 15, **characterized in that** heat-conducting fins or surface area-increasing means are arranged, prior to folding, on both sides of the sheet in the zones of the walls in order to increase the heat transfer between the two media.

19. Dewpoint cooler as claimed in claim 17, **characterized in that** the fins in adjacent layers co-act with each other mechanically such that all fins also serve as structural elements in the manner of a packet.

20. Dewpoint cooler as claimed in claim 17, **characterized in that** the sheet is provided in the zone of the wall with a perforation, to the edges of which the heat-conducting wall parts carrying the fins are sealingly adhered.

21. Dewpoint cooler as claimed in claim 14, **characterized in that** the inlet zone and/or the outlet zone of a channel is provided with a deflection dam (4, 49, 53) which deflects the relevant medium flow to the inlet or from the outlet.

22. Dewpoint cooler as claimed in claim 14, **characterized in that** the sheet is embodied as a laminate, comprising a metal inner layer which is coated on both sides with plastic outer layers.

23. Dewpoint cooler as claimed in claim 14, **characterized in that** two sheets are each folded into the form of a rectangular wave shape, wherein the two wave shapes have equal pitch, and are positioned mutually interlaced with a relative longitudinal orientation of 90°.

24. A dewpoint cooler obtained by applying a method as claimed in any of claims 1 to 12.

## Patentansprüche

1. Verfahren zum Herstellen eines Taupunktkühlers, mit:
zwei Sätzen von Mediumströmungskanälen, die wechselseitig verschachtelt angeordnet sind, wobei die Kanalsätze jeweils einen Primärmediumkreislauf und einen Sekundärmediumkreislauf bilden, durch die zwei Medien physikalisch getrennt und in Wärmeaustauschkontakt im Gegenstrom strömen können;
wärmeleitenden Wänden (8, 9, 25, 72, 94, 105, 116), die die Kanäle trennen; und
einem Gehäuse, in dem die die Kanäle begrenzenden Wände aufgenommen sind, wobei zwei Einlässe und zwei Auslässe für die beiden Kanalsätze mit dem Gehäuse verbunden sind,
wobei das Verfahren die folgenden Schritte aufweist, die in einer geeigneten Folge ausgeführt werden sollen:
(a) Bereitstellen einer plastisch verformbaren Platte;
(b) Bereitstellen mindestens eines Metallstreifens, der in einer allgemein wellenförmigen Struktur ausgebildet ist, die als Reihe von Lamellen bzw. Rippen (2, 3, 24, 47, 26, 94, 106, 107) dienen kann;
(c) plastisches Verformen der Platte derart, dass sie einen Randbereich erhält, durch den sie mit einer ähnlichen Platte verbindbar ist;
(d) vor oder nach Schritt (c): Verbinden des Streifens mit der plastisch verformbaren Platte durch die äußersten Flächen der Wellenform, die zur Platte hin derart ausgerichtet ist, dass eine wärmeleitende Wand mit wärmeleitenden Lamellen erzeugt wird;
(e) mehrmaliges Wiederholen der Schritte (a), (b), (c) und (d), um mehrere wärmeleitende Wände mit Lamellen zu erhalten;
(f) Verbinden dieser Wände mindestens in Zweiergruppen miteinander unter Verwendung der in Schritt (c) erhaltenen Randbereiche, so dass eine ausgewählte Anzahl derartiger Wände wechselseitig parallel angeordnet werden; und
(g) Anordnen dieser Wände in einem Gehäuse mit Primär- und Sekundäreinlässen und -auslässen für die jeweiligen Medien;
ferner mit dem Schritt zum Aufbringen einer hydrophilen und porösen oder faserigen Beschichtung auf den Lamellen.

2. Verfahren nach Anspruch 1, wobei die plastische Verformung in Schritt (c) in einem kalten Zustand stattfindet.

3. Verfahren nach Anspruch 1, wobei vor Schritt (d) eine Klebstoffschicht auf der Platte und/oder den Lamellen aufgebracht wird, und wobei Schritt (d) durch Gegeneinanderpressen der Platte und der Lamellen mindestens an der Position der Kontaktflächen, optional während einer Erwärmung, ausgeführt wird.

4. Verfahren nach Anspruch 3, wobei die Klebstoffschicht die Platte und/oder die Lamellen im Wesentlichen vollständig bedeckt und diese gegen Korrosion schützt.

5. Verfahren nach Anspruch 4, wobei die Klebstoffschicht als Folie aufgebracht wird.

6. Verfahren nach Anspruch 4, wobei die Klebstoffschicht zusammen mit der Platte durch Koextrusion als laminiertes Koextrudat ausgebildet wird.

7. Verfahren nach Anspruch 4, wobei die Platte und/oder die Lamellen aus einem Material bestehen, an dem die Klebstoffschicht nur schwer anhaftet, und wobei der der Platte und/oder den Lamellen zugewandte Teil der Klebstoffschicht über eine Grundierungsschicht daran anhaftet.

8. Verfahren nach Anspruch 7, wobei die Grundierung eine ausgewählte Farbe, ein ausgewähltes Muster und/oder eine ausgewählte Textur hat, und wobei die Klebstoffschicht transparent ist.

9. Verfahren nach Anspruch 4, wobei die Grundierung und/oder die Beschichtung Silber enthalten, so dass die Klebstoffschicht eine antimikrobielle Wirkung hat.

10. Verfahren nach Anspruch 1, wobei die endgefertigten Platten mit den Lamellen in alternierenden Paaren unter Verwendung der Randbereiche miteinander verklebt werden, und wobei mehrere derartige hergestellte Paare vor Schritt (g) stapelförmig angeordnet werden.

11. Verfahren nach Anspruch 3 und 10, wobei das Verkleben **dadurch** erfolgt, dass die Klebstoffschicht im Voraus auf den Platten aufgebracht wird und die Randbereiche, optional während einer Erwärmung, gegeneinander gepresst werden.

12. Verfahren nach Anspruch 11, wobei die Platten über ein Lagenmaterial (112), das im Voraus dazwischen angeordnet wird, und auf dessen beiden Seiten eine Klebstoffschicht aufgebracht ist, miteinander verklebt werden, wodurch die jeweiligen einander zugewandten Randbereiche und vorzugsweise auch die jeweiligen einander zugewandten Außenflächen der Lamellen, optional während einer Wärmezufuhr, z.B. durch Zuführen von Heißluft, durch Gegeneinanderpressen miteinander verklebt werden.

13. Taupunktkühler mit:
(a) zwei Sätzen von Mediumströmungskanälen, wobei die Kanalsätze jeweils einen Primärmediumkreislauf und einen Sekundärmediumkreislauf bilden, durch die zwei Medien physikalisch getrennt und in Wärmeaustauschkontakt im Gegenstrom strömen können;
(b) mehreren wärmeleitenden Wänden (8, 9, 25, 72, 94, 105, 116), die wechselseitig parallel verbunden sind und die Kanäle trennen;
(c) einem Gehäuse, in dem die die Kanäle begrenzenden Wände aufgenommen sind; und
(d) zwei Einlässen und zwei Auslässen, die den beiden Kanalsätzen zugeordnet und mit dem Gehäuse verbunden sind;
**dadurch gekennzeichnet, dass**
jede wärmeleitende Wand aufweist: (i) eine plastisch verformte Platte mit einem Randbereich (10, 113), der durch plastische Verformung der Platte ausgebildet ist und durch den die Platte mit einer ähnlichen Platte verbunden ist, und (ii) eine Reihe von Lamellen in der Form eines Metallstreifens, der in einer allgemeinen Wellenform bzw. wellenförmigen Struktur (2, 3, 24, 26, 47, 94, 106, 107) ausgebildet ist, die mindestens im Sekundärmediumströmungskreislauf mit der Platte verbunden ist, wobei die Lamellen eine hydrophile und poröse oder faserige Beschichtung aufweisen;
wobei ferner bereitgestellt wird:
(e) eine Wässerungseinrichtung zum Befeuchten der hydrophilen und porösen oder faserigen Beschichtung.

14. Taupunktkühler nach Anspruch 13, **dadurch gekennzeichnet, dass** die Wände in mindestens einer Gruppe aus mindestens zwei Wänden angeordnet sind, wobei eine Gruppe aus einem einstückigen Lagenmaterial gebildet wird, das mindestens eine Kunststoffschicht aufweist und durch Pressen, Thermoformen, Vakuumformen, Spritzgießen oder ein anderes Modellierungsverfahren in eine vorgegebene Form gebracht wird und am Übergang zwischen zwei benachbarten Wänden einen Gelenkbereich aufweist, wobei die beiden Wände dann durch Falten um den Gelenkbereich im Wesentlichen wechselseitig parallel und in einem vorgegebenen wechselseitigen Abstand angeordnet und durch eine Positionierungseinrichtung gehalten werden.

15. Taupunktkühler nach Anspruch 14, **dadurch gekennzeichnet, dass** ein Gelenkbereich aus zwei in dem wechselseitigen Abstand angeordneten Gelenklinien (6) besteht.

16. Taupunktkühler nach Anspruch 14, **dadurch gekennzeichnet, dass** ein Gelenkbereich aus zwei Teilen besteht, die einen Teil der jeweiligen Wände bilden und im Wesentlichen unter 90° geklappt sind, wobei die Teile durch eine Gelenklinie wechselseitig verbunden sind.

17. Taupunktkühler nach Anspruch 14, **dadurch gekennzeichnet, dass** das Lagenmaterial ein Laminat mit einer inneren Metallschicht ist, die auf beiden Seiten mit Kunststoffaußenlagen beschichtet ist.

18. Taupunktkühler nach Anspruch 15, **dadurch gekennzeichnet, dass** vor dem Umklappen auf beiden Seiten des Lagenmaterials in den Bereichen der Wände wärmeleitende Lamellen oder oberflächenvergrößernde Einrichtungen angeordnet werden, um die Wärmeübertragung zwischen den beiden Medien zu verbessern.

19. Taupunktkühler nach Anspruch 17, **dadurch gekennzeichnet, dass** die Lamellen in benachbarten Schichten mechanisch miteinander wechselwirken, so dass alle Lamellen auch als Strukturelemente in der Weise einer Schachtel dienen.

20. Taupunktkühler nach Anspruch 17, **dadurch gekennzeichnet, dass** das Lagenmaterial im Bereich der Wand eine Perforation bzw. Aussparung aufweist, an deren Rändern die wärmeleitenden Wandabschnitte, die die Lamellen tragen, abdichtend angeklebt sind.

21. Taupunktkühler nach Anspruch 14, **dadurch gekennzeichnet, dass** der Einlassbereich und/oder der Auslassbereich eines Kanals einen Ablenkdamm (4, 49, 53) aufweist, der die relevante Mediumströmung zum Einlass oder vom Auslass ablenkt.

22. Taupunktkühler nach Anspruch 14, **dadurch gekennzeichnet, dass** das Lagenmaterial als Laminat bereitgestellt wird, das eine innere Metallschicht aufweist, die auf beiden Seiten mit Kunststoffaußenlagen beschichtet ist.

23. Taupunktkühler nach Anspruch 14, **dadurch gekennzeichnet, dass** zwei Lagenmaterialien jeweils in eine Rechteckwellenform gefaltet sind, wobei die beiden Wellenformen jeweils eine gleiche Teilung haben und mit einer relativen Längsausrichtung von 90° wechselseitig verschachtelt angeordnet sind.

24. Taupunktkühler, der durch Anwenden eines Verfahrens nach einem der Ansprüche 1 bis 12 erhalten wird.

## Revendications

1. Procédé de fabrication d'un refroidisseur à point de rosée, comprenant :
deux ensembles de canaux d'écoulement de fluide placés d'une manière mutuellement entrelacée, lesquels ensembles de canaux forment respectivement un circuit de fluide principal et un circuit de fluide secondaire, à travers lesquels deux flux de fluide peuvent s'écouler à contre-courant, séparés physiquement et en contact d'échange de chaleur ;
des parois thermoconductrices (8, 9, 25, 72, 94, 105, 116) séparant lesdits canaux ; et un logement dans lequel les parois délimitant les canaux sont reçues, deux entrées et deux sorties étant reliées au logement pour les deux ensembles de canaux,
lequel procédé comprend les étapes suivantes, à effectuer dans l'ordre approprié, consistant à :
(a) fournir une plaque déformable de manière plastique ;
(b) fournir au moins une bande de métal mise en forme générale ondulée, qui peut servir en tant que rangée d'ailettes (2, 3, 24, 47, 26, 94, 106, 107) ;
(c) déformer la plaque de manière plastique de sorte qu'elle acquiert une zone de bord par laquelle elle peut être reliée à une plaque similaire ;
(d) avant ou après l'étape (c), relier la bande à la plaque déformable de manière plastique au moyen des surfaces les plus à l'extérieur de la forme ondulée dirigées vers la plaque de sorte qu'une paroi thermoconductrice avec des ailettes thermoconductrices soit créée ;
(e) répéter les étapes (a), (b), (c) et (d) un certain nombre de fois pour obtenir un certain nombre de parois thermoconductrices avec des ailettes ;
(f) relier ces parois au moins par deux les unes aux autres en utilisant les zones de bord conformément à l'étape (c) de sorte qu'un nombre choisi de ces parois soient placées dans une relation mutuellement parallèle ; et
(g) recevoir ces parois dans un logement avec des entrées et des sorties principales et secondaires pour les milieux respectifs ; comprenant en outre :
l'étape consistant à pourvoir les ailettes d'un revêtement hydrophile et poreux ou fibreux.

2. Procédé selon la revendication 1, dans lequel la déformation plastique selon l'étape (c) a lieu à l'état froid.

3. Procédé selon la revendication 1, dans lequel la plaque et/ou les ailettes sont pourvues, avant l'étape (d), d'une couche adhésive, et l'étape (d) est effectuée en pressant la plaque et les ailettes les unes contre les autres au moins à la position des surfaces de contact, optionnellement tout en chauffant.

4. Procédé selon la revendication 3, dans lequel la couche adhésive recouvre la plaque et/ou les ailettes sensiblement complètement et les protège contre la corrosion.

5. Procédé selon la revendication 4, dans lequel la couche adhésive est appliquée en tant que feuille.

6. Procédé selon la revendication 4, dans lequel la couche adhésive est formée en même temps que la plaque par coextrusion en un co-extrudât stratifié.

7. Procédé selon la revendication 4, dans lequel la plaque et/ou les ailettes consistent en un matériau auquel la couche adhésive adhère avec difficulté et la partie de la couche adhésive dirigée vers la plaque et/ou les ailettes est collée à celles-ci par l'intermédiaire d'une couche primaire.

8. Procédé selon la revendication 7, dans lequel la couche primaire a une couleur, un motif et/ou une texture choisis, et la couche adhésive est transparente.

9. Procédé selon la revendication 4, dans lequel la couche primaire et/ou le revêtement contiennent de l'argent, de sorte que la couche adhésive a une action anti-microbienne.

10. Procédé selon la revendication 1, dans lequel les plaques finies avec des ailettes sont collées les unes aux autres par paires alternées en utilisant les zones de bord, et un certain nombre de paires ainsi formées sont empilées les unes sur les autres avant l'étape (g).

11. Procédé selon les revendications 3 et 10, dans lequel le collage a lieu en appliquant aux plaques, à l'avance, la couche adhésive et en pressant les zones de bord les unes contre les autres, optionnellement en chauffant.

12. Procédé selon la revendication 11, dans lequel les plaques sont collées les unes aux autres par l'intermédiaire d'une feuille (112) qui est placée à l'avance entre elles et qui est pourvue sur les deux côtés d'une couche adhésive, et les zones de bord respectives dirigées les unes vers les autres et de préférence également les surfaces extérieures respectives des ailettes dirigées les unes vers les autres sont ainsi collées les unes aux autres en étant pressées les unes contre les autres, optionnellement avec l'application de chaleur, par exemple par apport d'air chaud.

13. Refroidisseur à point de rosée comprenant :
(a) deux ensembles de canaux d'écoulement de milieu, lesquels ensembles de canaux forment respectivement un circuit de fluide principal et un circuit de fluide secondaire, à travers lesquels deux flux de fluide peuvent s'écouler à contre-courant, séparés physiquement et en contact d'échange de chaleur ;
(b) une pluralité de parois thermoconductrices (8, 9, 25, 72, 94, 105, 116) reliées dans une relation mutuellement parallèle et séparant lesdits canaux ;
(c) un logement dans lequel les parois délimitant les canaux sont reçues ; et
(d) deux entrées et deux sorties associées aux deux ensembles de canaux et reliées au logement ; **caractérisé en ce que**
chaque paroi thermoconductrice comprend (i) une plaque déformable de manière plastique comportant une zone de bord (10, 113) déformée de manière plastique par rapport à la plaque, par laquelle elle est reliée à une plaque similaire et (ii) une rangée d'ailettes sous la forme d'une bande de métal mise en forme générale ondulée (2, 3, 24, 26, 47, 94, 106, 107), reliée à la plaque au moins dans le circuit d'écoulement de fluide secondaire, lesdites ailettes comprenant un revêtement hydrophile et poreux ou fibreux ; et **en ce que**, en outre (e) des moyens d'humidification sont prévus pour humidifier le revêtement hydrophile et poreux ou fibreux.

14. Refroidisseur à point de rosée selon la revendication 13, **caractérisé en ce que** les parois sont agencées en au moins un groupe d'au moins deux parois, dans lequel un groupe est formé à partir d'une feuille intégrale qui comprend au moins une couche de plastique et qui est mise en une forme présélectionnée par compression, thermoformage, formage sous vide, moulage par injection ou un autre processus de mise en forme et qui comporte une zone d'articulation dans la transition entre deux parois adjacentes, dans lequel, par pliage autour de la zone d'articulation, les deux parois sont ensuite placées dans une relation sensiblement mutuellement parallèle et à une distance mutuelle choisie, et sont maintenues par des moyens de positionnement.

15. Refroidisseur à point de rosée selon la revendication 14, **caractérisé en ce qu'**une zone d'articulation consiste en deux lignes d'articulation (6) qui sont situées à ladite distance mutuelle.

16. Refroidisseur à point de rosée selon la revendication 14, **caractérisé en ce qu'**une zone d'articulation comprend deux parties qui font partie des parois respectives et qui sont pliées sensiblement à 90°, lesquelles parties sont mutuellement reliées par une ligne d'articulation.

17. Refroidisseur à point de rosée selon la revendication 14, **caractérisé en ce que** la feuille est mise en oeuvre en tant que stratifié, comprenant une couche intérieure de métal qui est revêtue sur les deux côtés de couches extérieures de plastique respectives.

18. Refroidisseur à point de rosée selon la revendication 15, **caractérisé en ce que** des ailettes thermoconductrices ou des moyens d'augmentation d'aire de surface sont agencés, avant le pliage, des deux côtés de la feuille dans les zones des parois afin d'augmenter le transfert de chaleur entre les deux fluides.

19. Refroidisseur à point de rosée selon la revendication 17, **caractérisé en ce que** les ailettes dans les couches adjacentes agissent conjointement les unes avec les autres mécaniquement de sorte que toutes les ailettes servent également en tant qu'éléments structuraux à la manière d'un paquet.

20. Refroidisseur à point de rosée selon la revendication 17, **caractérisé en ce que** la feuille comporte, dans la zone de la paroi, une perforation, aux bords de laquelle les parties de paroi thermoconductrices supportant les ailettes adhèrent de manière étanche.

21. Refroidisseur à point de rosée selon la revendication 14, **caractérisé en ce que** la zone d'entrée et/ou la zone de sortie d'un canal comportent un barrage de déviation (4, 49, 53) qui détourne le flux de fluide concerné vers l'entrée ou de la sortie.

22. Refroidisseur à point de rosée selon la revendication 14, **caractérisé en ce que** la feuille est mise en oeuvre en tant que stratifié, comprenant une couche intérieure de métal qui est revêtue des deux côtés de couches extérieures de plastique.

23. Refroidisseur à point de rosée selon la revendication 14, **caractérisé en ce que** deux feuilles sont pliées chacune sous forme ondulée rectangulaire, dans lequel les deux formes ondulées ont un pas identique, et sont positionnées d'une manière mutuellement entrelacée avec une orientation longitudinale relative de 90°.

24. Refroidisseur à point de rosée obtenu en appliquant un procédé selon l'une quelconque des revendications 1 à 12.
